# EUROPEAN PATENT APPLICATION

(11) **EP 1 547 468 A1**
(43) Date of publication of application: **29.06.2005**
(21) Application number: 04028201.4
(22) Date of filing: 27.11.2004
(51) Int. Cl.: A22B 5/00, A22B 7/00, B65C 7/00, G09F 3/16

(54) **Clip with machine-readable identification unit for use on a transport device**

(30) Priority: 23.12.2003 DK 200301921
(71) Applicant: Slagteriernes Forskningsinstitut, 4000 Roskilde (DK)
(72) Inventor: Zachrau, Robert, 2670 Greve Strand (DK); Moeller, Helge, 2920 Charlottenlund (DK)

(57) **Abstract**

A clip (1) with a machine-readable identification unit (8) is placed on a transport device for automatic identification of this in reading stations or the like, e.g. in connection with transportation of meat objects on Christmas trees or meat hooks. The clip has two arms (2) that are connected at one end. The free end of at least one arm has a locking part (4) which, after the clip has been placed on the transport device, with a section (11) of the device between the two arms locks the clip to the device, and which by release enables removal of the clip from the device. The clip has a spring element (5) that is located between the two arms of the clip at a distance from the locking part (4) and which after locking of the clip on to the device actuates the section (11) of the device in the direction towards the locking part.

The present design provides a better securing of the clip with identification unit on the transport device, and the risk that the unit is brought out of position for correct reading of the identity therefore becomes smaller.

## Description

The present invention relates to a clip with a machine-readable identification unit for use on a transport device for transportation of objects, especially meat objects.

Slaughterhouses and meat-processing plants are using transport devices in the form of gambrels, meat hooks, and Christmas trees for suspension and transportation of meat objects, such as half carcasses or part carcasses, e.g. hams, fore-ends, and middles of pig carcasses. The devices are all provided with a top hook, on which the gambrel, the meat hook or the Christmas tree can be hung on a transport bar of a conveyor system, and a bottom part, on which the meat objects can be hung on hooks. Some types of transport devices have a top hook with a wheel that run on a rail.

The transport devices are used for conveyance of meat objects to different places in the plant for treatment or storage. In addition, meat hooks and Christmas trees can be used for transportation of half carcasses and part carcasses to other meat-processing plants in the transport wagons provided with horizontal bars, on which the filled meat hooks or Christmas trees can hang during the transportation.

In order to be able to identify the meat objects at the slaughterhouse it is practical to provide the top hook with an identification, e.g. a transponder, a bar code or the like, which is read automatically when the transport device passes reading stations on the slaughter line, so that the various product types are automatically managed with a view to settling, treatment, sale etc.

Identification units of the transponder type are sturdy, but also rather expensive. Therefore, it is necessary to remove them from the transport device before the suspended meat is sent to other plants.

DK 174.454 B1 describes a system comprising identification units, e.g. of the transponder type, which is affixed to the top hook of a transport device by means of a clip, so that it is rather easy to remove it again. However, it has been proved that the identification unit can be brought out of position by usually occurring physical actions on the transport line, so that the reading stations cannot read the identification code correctly.

The purpose of the present invention is to provide an improved clip that produces a better fixing of the identification unit to the top hook, in order to reduce the risk of the unit being brought out of position.

The clip according to the invention is characterized in that it comprises two arms that are connected with each other at one end, and of which the free end of at least one arm has a locking part which, after the clip has been placed on the transport device, with a section of the device between the two arms locks the clip to the device, and which by release enables removal of the clip from the device, and that it has a spring element that is located between the two arms of the clip at a distance from the locking part and which after locking the clip to the device actuates the section of the device in the direction towards the locking part.

The improved fixing of the clip with the identification unit to the transport device, e.g. to the top hook of a meat hook, is accomplished by the spring element pressing the section of the top hook between the arms in the direction towards the locking part, so that the top hook is not only being held between the two arms of the clip, but is also being squeezed in a firm grip between the spring element on one side and the locking part on the opposite side.

The word "clip" in the present text is particularly to be understood as a device that has two arms with clamping surfaces that in a squeezing way can fit tightly against two opposite sides of an object. The clip can be made of an elastic material, such as plastic or spring steel. The clip may have arms of a stiff construction and may be elastic on the piece that connects the arms, or it may have a spring between the arms with a similar function.

Favourable embodiments of the clip according to the invention are stated in claims 2-8.

The invention also relates to a transport device for transportation of objects, especially meat objects, comprising a clip with a machine-readable identification unit. The transport device according to the invention is characterized in that the clip comprises two arms which are connected with each other at one end, and of which the free end of at least one arm has a locking part which, after the clip has been placed on the transport device, with a section of the device between the two arms locks the clip to the device, and which by release enables removal of the clip from the device, and that the clip has a spring element that is located between the two arms of the clip at a distance from the locking part, and which after locking the clip to the device actuates the section of the device in the direction towards the locking part.

A favourable embodiment of the transport device according to the invention is stated in claim 10.

The invention also concerns a procedure for automatic removal of the clip from a transport device according to claim 9. The procedure according to the invention is characterized in that a cylindrical piece is pushed in between the two arms of the clip in order to increase, by actuation of the locking part, the distance between the two arms and release the locking effect.

The cylindrical piece preferably has a cross dimension that at least corresponds to the thickness of the section of the transport device where the clip is placed.

The invention is explained in further detail in the following with reference to the drawing, wherein
- Fig. 1 shows an embodiment of a clip according to the invention seen as a cross section from one side,
- Fig. 2 shows a cross section of the clip seen from another side,
- Fig. 3 shows a cross section of the clip and the top hook of a transport device seen from the same side as in Fig. 1 with the clip mounted on the top hook, and
- Fig. 4 illustrates a method for removal of the clip in Fig. 3 from the top hook.

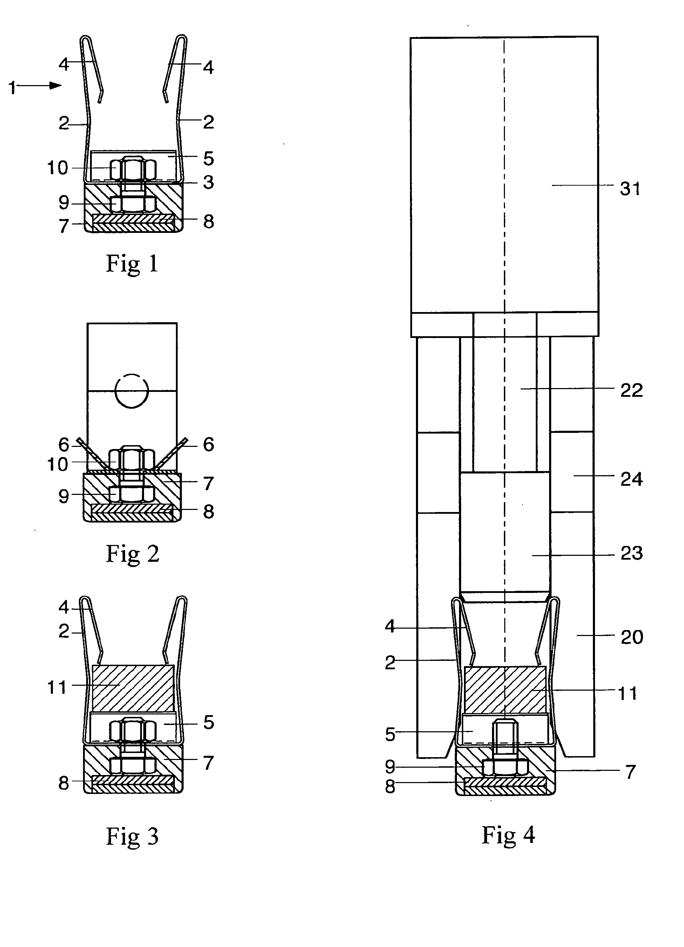

The clip 1 shown in Fig. 1 comprises two arms 2, which at one end are connected by an intermediate piece 3 and which each at the other end has a tongue 4 that goes in between the arms of the clip. The arms 2, the intermediate piece 3 and the tongues 4 are made in one piece of spring steel, which has been punched or cut from a sheet of steel and bent in the shape shown.

A spring element 5 in the form of a piece of spring steel with upwards-projecting wings 6 (Fig. 2) is placed on the topside of the intermediate piece 3. On the underside of the intermediate piece 3 has been placed a plastic block 7, which serves as a retainer for a transponder 8 or another identification unit that has an identification code (ID number). The code or the number can be read by reading stations that are placed at the transport route along which the transport device will be transported. The spring element 5 and the plastic block 7 with transponder 8 are fastened to the clip by means of a screw 9 complete with a nut 10. The intermediate piece 3 of the clip has a hole for the screw 9.

The arms 2 and the tongues 4 of the clip are resilient, so that the clip can be placed on a square section 11 of the top hook of the transport device (Fig. 3). It may e.g. be the top hook of a gambrel for a split pig carcass, the top hook of a Christmas tree, or the top hook of a meat hook. The mounting takes place by putting the clip with its open end on the top hook, and finally the clip is pressed harder against the top hook until the arms 2 and the tongues 4 go back like a click (snapping) to the position shown in Fig. 3.

During the pressing of the clip, one side of the top hook is in contact with the points of the wings 6 of the spring element. The wings will under an increasing pressure recede resiliently. When the tongues 4 of the arms of the clip snap into place on the opposite side of the top hook, the pressure can cease, as the tongues will prevent return movement. The spring element 5 has been set so that the clip 1, by means of tongues 4 and spring element 5, has a firm grip of the top hook 11. At the same time the arms 2 squeeze the two other sides of the top hook, which all in all causes the clip to hold firmly to the top hook and not to be displaced when exposed to the usually occurring actions, such as the action of brushes treating the carcass surface.

The mounting of the clip with transponder can be performed manually without use of tools. It can also be provided automatically.

The transport device has now been provided with a specific identity and it can be used for transport of meat objects through the plant while retaining knowledge of the identity/origin/type of the meat, since reading stations located along the transport route for the meat will read the ID code/number of the identification unit at the relevant places. The code may e.g. be related to the slaughter number, which is related to the producer of the animals supplied, and in this way a settling depending on the individual carcass can be made with the supplier, or veterinary remarks regarding the individual carcasses can be gathered/passed on. Furthermore, it can be ensured that the customers receive meat from specially bred animals. Finally, the plant can use the information about the identity of the animals to control the internal production, e.g. with a view to delivering homogeneous articles. If the transport device is a Christmas tree or a meat hook, the plant can e.g. keep a check on the suspended part carcasses and their origin and their distribution, both by internal and by external transportation. There are plenty of possibilities, and they will not be described in detail here, as they are well known within this field.

When there is no longer a need to maintain the identity on the transport device, e.g. because the meat objects have been removed from the transport device and have been transferred to a new treatment process, or because the suspended meat objects on the transport device are to be transported to a buyer, the clip with the identification unit can be removed.

The clip can be removed manually by the operator pulling apart the free ends of the arms of the clip and pressing the tongues inwards against their respective arms, so that the point is free of the top hook, after which the spring element, due to the pre-tension, by itself pushes the clip some distance away from the square section of the top hook. The operator can now remove the clip with the transponder completely, since it is only holding on to the top hook by the relatively weak spring power between the arms of the clip.

The operator can instead use a punch-like tool, which is pressed in between the tongues of the arms and which has such a thickness that the points of the tongues are pulled free of the top hook. The sloping position of the tongues creates a kind of wedging action from the tool that presses the tongues and the arms out and apart, so that their locking action is released and the clip can be removed from the top hook.

The tool shown in Fig. 4 uses the mentioned principle for automatic removal of the clip. The tool is moved by a means of transport that is not shown against the top hook with the clip that is to be removed, so two arms 20 go on the outer sides of the top hook. By means of a pneumatic cylinder 31 with piston rod 22, a punch-like releasing element 23 is led in between the tongues 4 of the clip, causing these and the arms to be pressed into an extreme position, where the points of the tongues go free of the top hook 11. The spring element 5 presses the clip some distance away from the top hook, so the points of the tongues can no longer lock the clip to the top hook, and when the free ends of the arms 2 meet a stop 24 on the arms 20 by the continued relative movement between tool and top hook, the clip is pulled off the top hook. The clips fall down into a box and can be used again when needed, e.g. on the same or on other types of transport devices.

## Claims

1. Clip (1) with a machine-readable identification unit (8) for use on a transport device for transportation of objects, particularly meat objects, **characterized in that** the clip comprises two arms (2) which are connected at one end, and of which the free end of at least one arm has a locking part (4), which after the clip has been placed on the transport device, with a section (11) of the device between the two arms locks the clip to the device, and which by release enables removal of the clip from the device, and that it has a spring element (5), which is located between the two arms of the clip at a distance from the locking part (4) and after locking of the clip to the device actuates the section (11) of the device in the direction of the locking part.

2. Clip according to claim 1, **characterized in that** the spring element (5) is placed on or shaped in an intermediate piece (3), which connects the two arms (2) of the clip.

3. Clip according to claim 1, **characterized in that** the spring element consists of spring steel and is shaped with squeeze surfaces (6) that actuate the section (11) in the direction towards the locking part (4).

4. Clip according to claim 1, **characterized in that** the locking part (4) projects inwards between the arms (2) of the clip.

5. Clip according to claim 1, **characterized in that** the locking part (4) is shaped as a tongue that runs down between the two arms (2) of the clip.

6. Clip according to claim 5, **characterized in that** the tongue (4) is made of a bent part of the free end of the arms.

7. Clip according to claim 5, **characterized in that** the tongue (4) from the free end of the arms has a sloping course inwards between the two arms (2) of the clip.

8. Clip according to claim 1, **characterized in that** the arms (2) of the clip with locking part (4), an intermediate piece (3), which connects the two arms, and maybe also the spring element (5) have been made in one piece of spring steel.

9. Transport device for transportation of objects, especially meat objects, comprising a clip with a machine-readable identification unit, **characterized in that** the clip (1) has two arms (2) which are connected at one end and of which the free end of at least one arm has a locking part (4) that, after the clip has been placed on the transport device, with a section (11) of the device between the two arms locks the clip to the device, and which by release enables removal of the clip from the device, and that the clip has a spring element (5) that is placed between the two arms (2) of the clip at a distance from the locking part (4) and which after locking of the clip to the device, actuates the section (11) of the device in the direction towards the locking part.

10. Device according to claim 9, **characterized in that** the clip is placed on a transport device for meat, which comprises a section (11) serving to mount the clip on a top hook for suspension and transportation of the device on a transport bar or rail, and a hook part connected with the top hook for suspension of the meat on the device.

11. Procedure for automatic removal of the clip (1) from a device according to claim 9, **characterized in that** a cylindrical piece (23) is pushed in between the two arms (2) of the clip in order to increase, by actuation of the locking part, the distance between the two arms and release the locking effect.

12. Procedure according to claim 11, **characterized in that** the cylindrical piece (23) used has a cross dimension which at least corresponds to the thickness of the section (11) of the transport device where the clip is placed.
